# EUROPÄISCHE PATENTANMELDUNG

(11) **EP 1 236 680 A2**
(43) Veröffentlichungstag der Anmeldung: **04.09.2002**
(21) Anmeldenummer: 02000631.8
(22) Anmeldetag: 11.01.2002
(51) Int. Cl.: C01B 7/07, C01B 7/09

(54) **Verfahren zur adsorptiven Trennung von Halogenwasserstoffen**

(30) Priorität: 28.02.2001 DE 10109782
(71) Anmelder: Degussa AG, 40474 Düsseldorf (DE)
(72) Erfinder: Burghardt, Rudolf, Dr., 45657 Recklinghausen (DE); Kahsnitz, John, Dr., 45721 Haltern (DE)

(57) **Zusammenfassung**

Die Erfindung betrifft ein Verfahren zur Trennung von Halogenwasserstoffen, wobei ein mindestens zwei Halogenwasserstoffe enthaltendes Gas mit einem Adsorptionsmittel in Kontakt gebracht wird und das Adsorptionsmittel mindestens einen Halogenwasserstoff selektiv zurückhält.

## Beschreibung

Die Erfindung betrifft ein Verfahren zur adsorptiven Trennung von Halogenwasserstoffen, insbesondere zur Abtrennung kleiner Mengen von Bromwasserstoff aus Chlorwasserstoff

Viele chemische Synthesen werden mit hochreinem bromwasserstofffreien Chlorwasserstoff durchgeführt. Ein Beispiel hierfür ist die Herstellung von Siliziumtetrachlorid aus Chlorwasserstoff und Silizium. Für die Synthese von hochreinem Siliziumtetrachlorid für die Lichtleiterherstellung ist die Verwendung von bromwasserstofffreiem Chlorwasserstoffgas sogar eine unbedingte Voraussetzung. Ursache für die Verunreinigung von Chlorwasserstoff bzw. Salzsäure mit Bromwasserstoff ist häufig eine Kontamination der für die Chloralkalielektrolyse eingesetzten Sole mit Bromiden. Diese werden elektrolytisch zu elementarem Brom umgesetzt. Brom reagiert in der anschließenden Chlorwasserstoffsynthese zu Bromwasserstoff.

Ein technisch angewandtes Verfahren zur Entfernung von Bromiden aus der Sole ist die Oxidation mit Chlor. Das dabei gebildete Brom wird durch Strippung mit Luft entfernt. Beim sogenannten Heißentbromungsverfahren dient Dampf als Stripmittel. Weitere Verfahren zur Bromentfernung aus Kochsalzlösungen beruhen auf einer Kombination von Oxidation mit Chlor und Umsetzung des gebildeten Broms in der wässrigen Phase beziehungsweise Extraktion mit organischen Lösemitteln.

In dem japanischen Dokument JP 61 054 235 wird die adsorptive Reinigung von sauren Gasen oder Mischungen mit sauren Gasen (Chlor, Halogenwasserstoffe) an Mordeniten beschrieben. Als Verunreinigung wird Wasser angegeben, während die Abtrennung von Bromwasserstoff nicht explizit erwähnt wird.

Mit allen genannten Verfahren ist eine Abreicherung von Brom unterhalb einer Konzentration von 2 Gew.-ppm nur mit sehr großem Aufwand möglich. Somit scheiden diese Verfahren zur Vorbehandlung der Sole für die technische Herstellung von bromfreien (< 2 Gew.-ppm) Chlorwasserstoff praktisch aus. Effektive Reinigungsverfahren müssen somit beim Chlorwasserstoffgas angewandt werden, um Bromkontaminationen vollständig zu entfernen.

Es wurde nun gefunden, dass Halogenwasserstoffe adsorptiv getrennt werden können. Insbesondere wurde gefunden, dass als Bromwasserstoff im Chlorwasserstoff vorliegendes Brom adsorptiv aus Chlorwasserstoff entfernt werden kann.

Gegenstand der Erfindung ist daher ein Verfahren zur Trennung von Halogenwasserstoffen, bei dem ein mindestens zwei Halogenwasserstoffe enthaltendes Gas mit einem Adsorptionsmittel in Kontakt gebracht wird und das Adsorptionsmittel mindestens einen Halogenwasserstoff selektiv zurückhält.

Das Adsorptionsverfahren zeichnet sich durch eine sehr hohe Trennschärfe aus, da der Adsorber eine sehr große Zahl von theoretischen Trennstufen besitzt, so dass zum Beispiel eine Abreicherung des Bromgehaltes auf Konzentrationen unterhalb von 2 Gew.-ppm möglich ist. Das ist insofern überraschend, als im Falle der Abtrennung von wenig Bromwasserstoff aus Chlorwasserstoff im oben geschilderten Fall der Chlorwasserstoff als Konkurrent bei der Adsorption im riesigen Überschuss vorhanden ist.

Die Konzentration an den zu reinigenden Halogenwasserstoffen, insbesondere also des Chlorwasserstoffes im Gas beträgt 10 - 100 Vol.-%, vorzugsweise 50 - 100 Vol.-%, besonders bevorzugt 90 - 100 Vol.-%. Der Rest ist in der Regel Luft oder Stickstoff bzw. ein anderes geeignetes Inertgas.

Die Konzentration an dem abzutrennenden Halogenwasserstoff, insbesondere also des Bromwasserstoff im Gas beträgt je nach Herkunft des zur Elektrolyse eingesetzten Salzes 0,1 - 20 000 Gew.-ppm, vorzugsweise 0,5 bis 2 000 Gew.-ppm, besonders bevorzugt 1 bis 500 Gew.-ppm.

Neben Zeolithen sind vor allem Aktivkohlen verschiedenster Art als Adsorptionsmittel für die Trennung geeignet. Das Adsorptionsmittel kann pulverförmig oder vorzugsweise in pelletierter Form eingesetzt werden.

Als Anordnung für das Adsorptionsmittel kann insbesondere ein Festbett, ein Wanderbett oder eine Wirbelschicht verwendet werden. Bei Anordnung in einem Festbett können, wie bei Adsorptionen üblich, mehrere Festbetten hintereinander oder parallel oder auch in Kombinationen angeordnet werden, so dass sowohl das Erkennen einer Sättigung und die Sicherung gegen Durchbruch als auch die Regeneration erleichtert werden.

Die Temperatur bei der Adsorption beträgt 0 - 100 °C, vorzugsweise 0 - 50 °C, besonders bevorzugt 0 - 30 °C. Um die optimale, in der Regel möglichst niedrige Temperatur einzustellen, muss eventuell gekühlt oder bei sehr niedrigen Außentemperaturen entsprechend geheizt werden.

Der Druck in der Adsorptionsstufe beträgt 0,1 bis 20 bar, vorzugsweise 0,2 - 10 bar, besonders bevorzugt 1 - 3 bar, ganz besonders bevorzugt ca. 1 bar (Umgebungsdruck).

Die Leerrohrgeschwindigkeit beträgt im Falle der Festbettanordnung besonders bevorzugt 0,1 - 40 cm/s.

Das beladene Adsorptionsmittel kann zum Beispiel thermisch regeneriert und rezykliert werden.

### Beispiel

In der Tabelle 1 sind die Versuchsparameter und Ergebnisse eines Adsorptionsversuches zur Trennung von Bromwasserstoff und Chlorwasserstoff wiedergegeben.

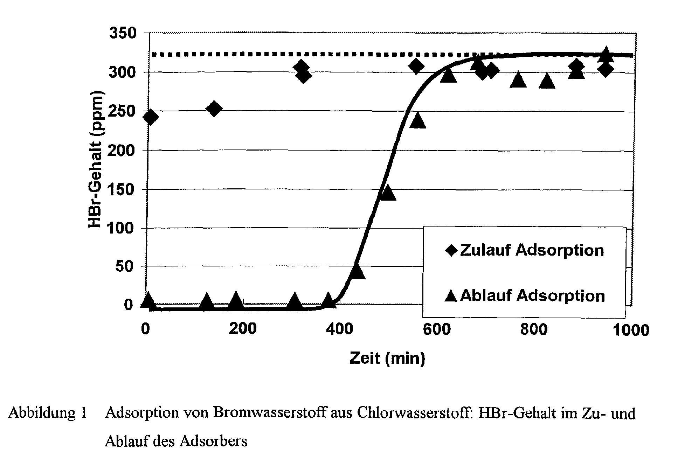

Die Abbildung 1 zeigt die Ergebnisse des Adsorptionsversuches. Dargestellt ist die zeitliche Abhängigkeit der Bromwasserstoffkonzentration im Zu- und Ablauf des Adsorbers. Als Adsorptionsmittel wurde eine Aktivkohle (Einwaage 93,3 g) der Firma Carbo-Tech (CMS-H) eingesetzt. Der Chlorwasserstoffvolumenstrom betrug ca. 150 l/h. Vor Durchbruch des Bromwasserstoffs beträgt die Bromwasserstoffkonzentration weniger als 2 Gew.-ppm, was unter diesen Bedingungen die analytische Nachweisgrenze ist. Der Versuch zeigt, dass über längere Zeit eine nahezu vollständige Abreicherung des Bromwasserstoffes erreicht wird.

**Tabelle 1**

| **Versuchsparameter und Ergebnisse eines Adsorp-tionsversuches zur Trennung von Bromwasserstoff und Chlorwasserstoff** | | |
|---|---|---|
| Absorberkolonne | | |
| Betthöhe | 400 | mm |
| Durchmesser | 20 | mm |
| Bettvolumen | 0,13 | L |
| Adsorptionsmittel | Aktivkohle CMS-H | |
| Lieferant | Carbo-Tech | |
| Einwaage | 93,92 | g |

| Betriebsbedingungen | | |
|---|---|---|
| Zulauf | 146 | L/h |
| HBr-Gehalt | 300 | ppm (m/m) |
| Leerrohrgeschwindigkeit | 0,13 | m/s |
| Verweilzeit im Bett | 3,1 | s |

| Adsorberperformance | | |
|---|---|---|
| Gleichgewichtsbeladung | 0,7 | % HBr |
| Gleichgewichtsbeladung | 6 | % HCI |
| Durchbruchszeitpunkt | 8,3 | h |
| Ablaufkonzentration | < 2 | ppm (m/m) |

## Patentansprüche

1. Verfahren zur Trennung von Halogenwasserstoffen,
**dadurch gekennzeichnet, dass**
ein mindestens zwei Halogenwasserstoffe enthaltendes Gas mit einem Adsorptionsmittel in Kontakt gebracht wird und das Adsorptionsmittel mindestens einen Halogenwasserstoff selektiv zurückhält.

2. Verfahren nach Anspruch 1,
**dadurch gekennzeichnet, dass** einer der Halogenwasserstoffe Chlorwasserstoff und einer der Halogenwasserstoffe Bromwasserstoff ist.

3. Verfahren nach Anspruch 1,
**dadurch gekennzeichnet, dass**
die Konzentration der zu reinigenden Halogenwasserstoffe im Gas 10 - 100 Vol.-% beträgt.

4. Verfahren nach Anspruch 1,
**dadurch gekennzeichnet, dass**
Bromwasserstoff aus Chlorwasserstoff abgetrennt wird.

5. Verfahren nach Anspruch 4,
**dadurch gekennzeichnet, dass**
die Konzentration an Bromwasserstoff im Gas 0,1 - 20 000 Gew.-ppm beträgt.

6. Verfahren nach einem der vorhergehenden Ansprüche,
**dadurch gekennzeichnet, dass**
als Adsorptionsmittel Aktivkohle oder Zeolith verwendet wird.

7. Verfahren nach einem der vorhergehenden Ansprüche,
**dadurch gekennzeichnet, dass**
das Adsorptionsmittel in Form eines Festbettes, eines Wanderbettes oder eines Wirbelbettes eingesetzt wird.

8. Verfahren nach einem der vorhergehenden Ansprüche,
**dadurch gekennzeichnet, dass**
die Temperatur bei der Adsorption 0 bis 100 °C beträgt.

9. Verfahren nach einem der vorhergehenden Ansprüche,
**dadurch gekennzeichnet, dass**
der Druck bei der Adsorption 0,1 bis 20 bar beträgt.

10. Verfahren nach einem der vorhergehenden Ansprüche,
**dadurch gekennzeichnet, dass** die Leerrohrgeschwindigkeit im Falle des Festbettes bei der Adsorption 0,1 - 40 cm/s beträgt.
